# EUROPEAN PATENT APPLICATION

(11) **EP 2 246 815 A1**
(43) Date of publication of application: **03.11.2010**
(21) Application number: 10250831.4
(22) Date of filing: 27.04.2010
(51) Int. Cl.: G06Q 40/00

(54) **Financial institute-implemented account management system**

(30) Priority: 27.04.2009 US 430706
(71) Applicant: Bank of America Corporation, Charlotte, NC 28255 (US)
(72) Inventor: Krein, Mark V., Charlotte North Carolina 28255 (US); Shao, Yanghong, Charlotte North Carolina 28255 (US); Thayer, Allison, Charlotte North Carolina 28255 (US); Banerjee, Sudeshna, Charlotte North Carolina 28255 (US); Joa, David, Charlotte North Carolina 28255 (US); Newman, Kurt D., Charlotte North Carolina 28255 (US); Ghosh, Debashis, Charlotte North Carolina 28255 (US)
(74) Representative: Kinsler, Maureen Catherine

(57) **Abstract**

Systems, methods, and computer program products are provided for an automated system for financial institution account management. The methods, systems and computer program products herein described allow the customer to link financial institution accounts and authorize a financial institution automatically and intuitively manage the linked accounts, Automated management includes managing the transfer of funds between accounts to ensure minimum balances, maximize rate of return and minimize the number of transfers between accounts.

## Description

### REFERENCE TO CO-PENDING APPLICATION FOR PATENT

The present Application for Patent is related to co-pending United States Patent Application entitled, "Customer-Defined Account Management Rules for Improved Linked Financial Institution Account Management", inventors Ghosh, et al., U.S. Serial No. 12/430,612, filed April 27. 2009. assigned to the assignee hereof, and expressly incorporated by reference herein.

### FIELD

In general, embodiments herein disclosed relate to systems, methods, and computer program products for managing financial institution accounts and, more specifically, customer-authorized automated management of financial institution accounts by an associated financial institution.

### BACKGROUND

Many financial institution customers, such as bank customers have difficulty managing their various bank or financial institution accounts. This problem is especially evident with management of checking and/or bill pay accounts to ensure that current balances are sufficient to cover account expenditures. As a result, if the customer makes expenditures from an account that is not properly funded, the customer may incur undesirable overdraft fees associated with bank or financial institution having to properly fund the account after the expenditure has incurred. While access to account management has become more prevalent recently due to the inception of different banking channels, such as Automated Teller Machines (ATMs), online banking and such, the customer still has to dedicate a certain amount of time, on a regular basis, to account management to ensure that accounts are properly funded to protect against overdrafts or the like.

In addition, to managing financial institution accounts to ensure against overdrafts, customers have a desire to maximize the rate of return on their account balances. In this regard, a customer would rather have their non-utilized or excessive funds in a high-interest bearing account, such as a savings account or a money market account, as opposed to a low-interest bearing account, such as a checking account or the like. However, since managing accounts to ensure maximum rate of return is typically directly opposed to managing accounts to ensure against overdrafts, the customer must dedicate even a greater amount of time to account management in order to create the proper balance between ensuring maximum rate of return and protecting against overdrafts.

Therefore, a need exists to improve customer management of financial institution accounts. The desired invention should provide for an increase in the customer's rate of return by ensuring that account balances are managed so to provide for excessive balances in high interest bearing accounts as opposed to low interest bearing accounts. Additionally, a need exists to ensure that customer accounts, such as checking account, bill pay accounts and the like, are sufficiently funded to cover any and all expenditures or debits made from the accounts. In this regard, the desired invention should significantly reduce the number of customer overdrafts, and related overdraft fees, by providing for alternate means of funding the payment account.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

Methods, systems and computer program products are defined that provide for an automated system for managing financial institution accounts. In accordance with embodiments of the invention, a financial institution customer links various internal or external financial institution accounts and subsequently grants a financial institution authorization to automatically manage the accounts. The automatic management of the accounts may provide for transferring funds in the managed accounts so as to maximize the customer's overall rate of return. In this regard, the automated system serves to prefer holding funds in higher interest bearing accounts, such as savings accounts, money market accounts or the like as opposed to holding funds in lower interest bearing accounts, such as checking or bill pay accounts. In addition, the automated account management system serves to limit the number of account transfers, thus reducing the costs associated with such transfers. Since maximizing rate of return involves the transfer of funds between accounts, in one embodiment, the system attempts to create an efficient and cost effective balance between maximizing rate of return and limiting the number of transfers.

A method for managing financial institution accounts defines an embodiment of the invention. The method includes receiving one or more financial institution account link requests and establishing the one or more financial institution account links based on the one or more link requests. Each link request provides for linking two or more financial institution accounts associated with a customer. The method also includes receiving customer authorization for financial institution-implemented automated account management of two or more of the linked financial institution accounts and storing the customer authorization for the financial institution-implemented automated account management system in a customer profile associated with the customer. Additionally, the method includes managing, automatically, the customer authorized two or more linked financial institution accounts. Managing the accounts includes transferring funds to maximize the customer's rate of return in the two or more linked financial institution accounts.

According to one specific embodiment of the method managing may further include creating a balance between the transferring of funds to maximize the customer's rate of return in the two or more linked financial institution accounts and minimizing a quantity of transfers.

According to another specific embodiment of the method, managing may further include determining an operative account balance for one or more of the linked financial institution accounts. In such embodiments, determining the operative account balance may further include determining the operative account balance based on at least one of account type or historical account usage data. Further, determining an operative account balance may further include defining at least one of a minimum account balance or a maximum account balance.

In yet another specific embodiment of the method, managing may further include determining a transferor account priority for selecting a transferor account for transferring funds to one or more of the linked financial institution accounts. In such embodiments, determining the transferor account priority may further include determining transferor account priority based on rate of return of transferor accounts, account type and/or historical account usage data.

Additionally, in another specific embodiment of the method, managing may further include determining a transferee account for transferring funds from one or more of the linked financial institution accounts. In such embodiments, determining the transferee account may further include determining the transferee account based on rate of return.

According to another specific embodiment of the method, managing may further include identifying one or more recurring debits from one or more of the linked financial institution accounts and maintaining a balance sufficient to cover the recurring debit. In such embodiments, managing may further include identifying a proximate date for the one or more recurring debits and transferring funds to the linked financial institution accounts associated with the one or more recurring debits prior to the identified proximate date.

Moreover, according to another embodiment of the method, managing may further include determining and implementing a payment hold period for an outstanding payment account debit that requires funds to be transferred to the payment account to satisfy the debit. In such embodiments, determining the payment hold period may further include determining, dynamically, the payment hold period based on a the payment account, transferor account type, transferor account location, transfer amount and/or transferor account priority.

An apparatus for managing financial institution accounts provides for another embodiment of the invention. The apparatus includes a computer platform including at least one processor and a memory having a customer profile database including a plurality of customer profiled stored therein. The apparatus also includes an account linking module stored in the memory, executable by the at least one processor, and operable to receive one or more financial institution account linking requests and establish the one or more fmancial institution links. Each link provides for linking two or more financial institution accounts associated with a customer. The apparatus also includes an automated account management module stored in the memory, executable by the at least one processor, and operable to receive customer authorization for automated account management of two or more of the linked financial institution accounts. The automated account management module is further operable to transfer funds, automatically, from and to the customer authorized linked financial institution accounts to maximize the customer's rate of return in the two or more linked financial institution accounts.

According to a specific embodiment of the apparatus, the automated account management module is further operable to create a balance between the automatic transfer of funds to maximize the customer's rate of return in the two or more linked financial institution accounts and limiting a quantity of transfers.

In an alternate embodiment of the apparatus, the automated account management routine may further include an operative account balance determination routine operable to determine the operative account balance for one or more of the linked financial institution accounts. In such embodiments, the operative account balance determination routine may be further operable to determine the operative account balance based on at least one of account type or historical account usage data. In still further embodiments, the operative account balance determination routine may be further operable to determine at least one of a minimum account balance or a maximum account balance.

In another alternate embodiment, the automated account management module may further include a minimum account balance routine and/or a maximum account balance routine operable to determine and maintain a minimum and/or maximum account balance for the one or more of the linked financial institution accounts.

In yet another alternate embodiment, the automated account management module may further include a transferor account priority determiner routine operable to determine a transferor account priority for selecting a transferor account for transferring funds to one or more of the linked financial institution accounts. In such embodiments, the transferor account priority determiner routine may be further operable to determine transferor account priority based on rate of return of transferor accounts, account type and/or historical account usage data.

According to another alternate embodiment of the apparatus, the automated account management routine may further include a transferee account determiner routine operable to determine a transferee account for transferring funds from one or more of the linked financial institution accounts. In such embodiments, the transferee account determiner routine is further operable to determine the transferee account based on rate of return.

In another specific alternate embodiment of the apparatus, the automated account management routine may further include a recurring debit routine operable to identify one or more one or more recurring debits from one or more of the linked financial institution accounts and maintaining a balance in an associated linked financial institution account sufficient to cover the recurring debit. In such embodiments, the recurring debit routine may be further operable to identify a proximate date for the one or more recurring debits and transfer funds to the associated linked financial institution account prior to the identified proximate date.

In yet another specific alternate embodiment of the apparatus, the automated account management module may further include a payment hold period routine operable to determine and implement a payment hold period for an outstanding payment account debit that requires funds to be transferred to the payment account to satisfy the debit. In such embodiments, the payment hold period routine may be further operable to determiner, dynamically, the payment hold period based on a present need to transfer funds to the payment account, transferor account type, transferor account location, transfer amount and/or transferor account priority.

A computer program product that includes a computer-readable medium defines yet embodiment of the invention. The medium includes a first set of codes for causing a computer to receive one or more financial institution account link requests and a second set of codes for causing a computer to provide for one or more financial institution account links based on the one or more link requests. Each link request provides for linking two or more financial institution accounts associated with a customer. The medium also includes a third set of codes for causing a computer to receive customer authorization for financial institution-implemented automated account management of two or more of the linked financial institution accounts and a fourth set of codes for causing a computer to store the customer authorization for the financial institution-implemented automated account management system in a customer profile associated with the customer. Additionally, the medium includes a fifth set of codes for causing a computer to manage, automatically, the customer authorized two or more linked financial institution accounts.

Thus, presently described embodiments are herein disclosed that provide for an automated system for managing financial institution accounts. In accordance with embodiments of the invention, the automated management of the accounts may provide for transferring funds in the managed accounts so as to maximize the customer's overall rate of return. In this regard, the automated system serves to prefer holding funds in higher interest bearing accounts, such as savings accounts, money market accounts or the like as opposed to holding funds in lower interest bearing accounts, such as checking or bill pay accounts. In addition, the automated account management system serves to limit the number of account transfers, thus reducing the costs associated with such transfers. Since maximizing rate of return involves the transfer of funds between accounts, in one embodiment, the system attempts to create an efficient and cost effective balance between maximizing rate of return and limiting the number of transfers.

To the accomplishment of the foregoing and related ends, the one or more embodiments comprise the features hereinafter fully described and particularly pointed out in the claims. The following description and the annexed drawings set forth in detail certain illustrative features of the one or more embodiments. These features are indicative, however, of but a few of the various ways in which the principles of various embodiments may be employed, and this description is intended to include all such embodiments and their equivalents.

### BRIEF DESCRIPTION OF THE DRAWINGS

Having thus described embodiments of the invention in general terms, reference will now be made to the accompanying drawings, which are not necessarily drawn to scale, and wherein:
**FIG. 1** is a block diagram depiction of a system for financial account management implementing automated account management, according to an embodiment of the present invention;
**FIG. 2** is a block diagram depiction of linked customer accounts; in accordance with embodiments of the present invention;
**FIG. 3** is a more detailed block diagram of an apparatus configured for providing a system for financial account management, in accordance with an embodiment of the present invention;
**FIG. 4** is a block diagram depiction of an alternate system for financial account management implementing customer-defined account management rules, in accordance with present embodiments;
**FIG. 5** is a flow diagram of a method for financial institution account management highlighting financial institution-automated account management, in accordance with yet another embodiment of the present invention;
**FIG. 6** is a flow diagram for financial institution account management highlighting customer-defined rules for ensuring adequate funding, in accordance with present embodiments;
**FIG. 7** is a flow diagram of a method for financial institution account management highlighting customer-defined rules for maximizing rate of return, in accordance with present embodiments; and
**FIG. 8** is a flow diagram of a method for financial institution account management highlighting customer-defined rules for ensuring minimum account balances, in accordance with an embodiment of the present invention.

### DETAILED DESCRIPTION OF EMBODIMENTS OF THE INVENTION

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure will satisfy applicable legal requirements. In the following description, for purposes of explanation, numerous specific details are set forth in order to provide a thorough understanding of one or more embodiments. It may be evident; however, that such embodiment(s) may be practiced without these specific details. Like numbers refer to like elements throughout.

Various embodiments or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The steps and/or actions of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some embodiments, the processor and the storage medium may reside in an Application Specific Integrated Circuit (ASIC). In the alternative, the processor and the storage medium may reside as discrete components in a computing device. Additionally, in some embodiments, the events and/or actions of a method or algorithm may reside as one or any combination or set of codes and/or instructions on a machine-readable medium and/or computer-readable medium, which may be incorporated into a computer program product.

In one or more embodiments, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures, and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Thus, methods, systems, computer programs and the like are herein disclosed that provide financial institution account management. According to one embodiment, financial institution account management provides for an automated system for managing financial institution accounts. In accordance with embodiments of the invention, a financial institution customer links various internal or external financial institution accounts and subsequently grants a financial institution authorization to automatically manage the accounts. The automated management of the accounts may provide for transferring funds amongst the managed accounts so as to maximize the customer's overall rate of return. In this regard, the automated system serves to prefer holding funds in higher interest bearing accounts, such as savings accounts, money market accounts or the like as opposed to holding funds in lower interest bearing accounts, such as checking or bill pay accounts. In addition, the automated account management system serves to limit the number of account transfers, thus reducing the costs associated with such transfers. Since maximizing rate of return involves the transfer of funds between accounts, in one embodiment, the system attempts to create an efficient and cost effective balance between maximizing rate of return and limiting the number of transfers.

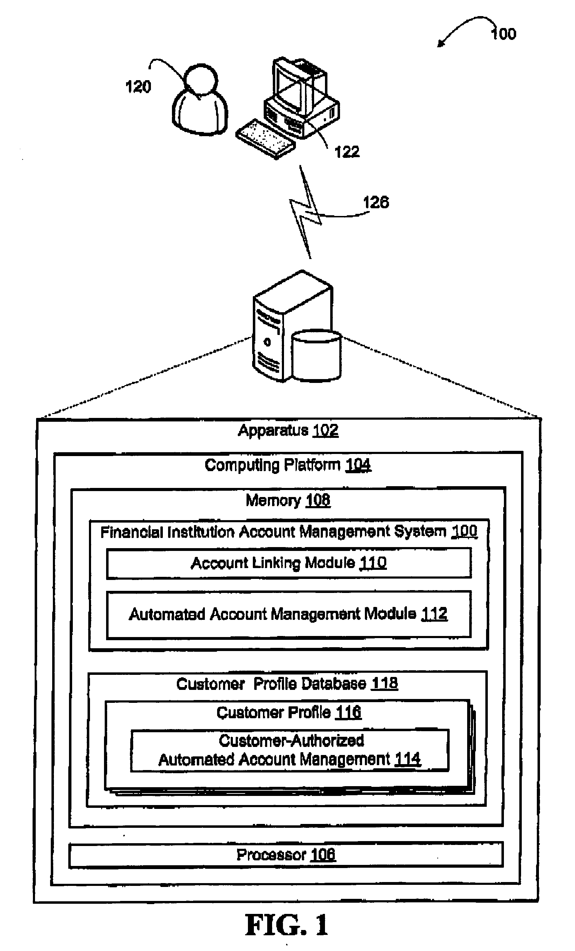

Referring to **FIG. 1****,** a block diagram is depicted of an automated financial institution account management system 100, in accordance with an embodiment of the present invention. The system 100 includes an apparatus 102, which may include one and, typically, a plurality of devices in the control of a financial institution, such as bank or the like. The apparatus 102 includes a computing platform 104 having at least one processor 106 and a memory 108. The memory 108 of apparatus 102 includes a financial institution account management system 100 that is operable to provide customer 120 the ability to link a plurality of customer accounts and for the customer to authorize the management system 300 to automatically manage the accounts, for example, the account balances, in the designated linked accounts.

According to one embodiment of the invention, customer 120 may interface with the financial institution account management system 100 via a computing device 124 having a wired and/or wireless network connection 126. While the embodiment illustrated in **FIG. 1**, depicts a personal computer (PC) as the computing device 124, in other embodiments, the computing device may take the form of any device capable of network communication, such as a laptop computer, a handheld wireless device, such as a cellular telephone, personal digital assistant (PDA) or the like. In one embodiment of the invention, the financial institution providing the financial institution account management system 100 may use the Internet, and more specifically, an online banking postal, as the platform for providing the customer access to the system 100. In this regard, customer 120 may access the financial institution account management system 100 through a financial institution's online banking site or the like to establish account links and/or authorize the Financial institution to automatically manage two or more designated linked accounts.

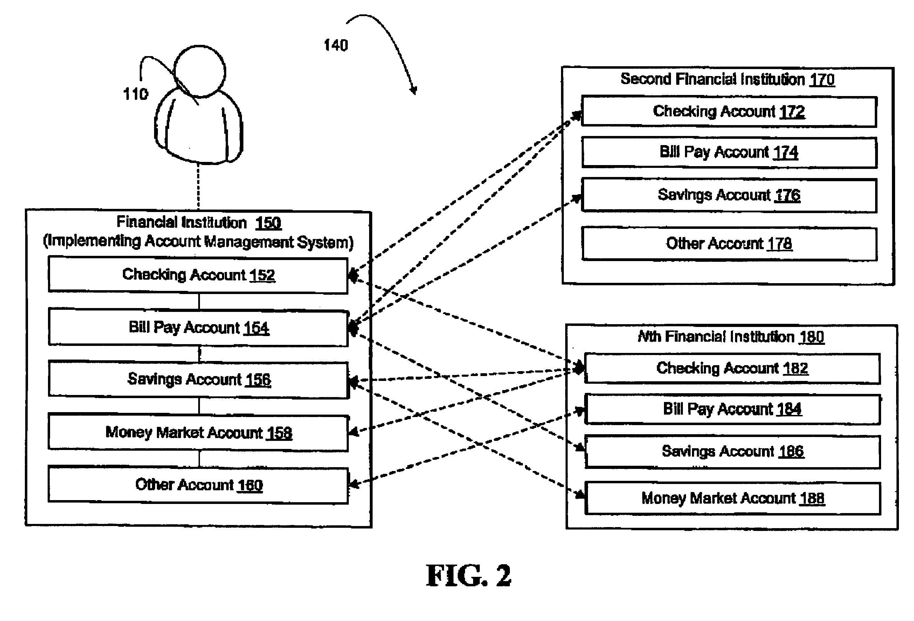

Financial institution account management system 100 includes account linking module 110 that is operable to receive customer requests to link financial institution accounts and establish account links in accordance with the requests. In one embodiment a link request includes the routing number and account number of the account being linked. Account links may be established between two or more customer accounts. In this regard, for example, a customer account, such as a customer checking account or the like, may have a first link established with first internal or external account, a second link with a second internal or external account and so forth. As noted, and further discussed in relation to **FIG. 2**. infra., the link may be established between internal financial institution accounts (*i*.*e*., accounts provided by the financial institution implementing the account management system 100) and/or between internal financial institution accounts and external financial institution accounts (*i*.*e*., accounts provided by other financial institutions, such as other banks, credit unions, brokerage firms, or the like).

Financial institution account management system 300 additionally includes automated account management module 312 that is operable to receive customer authorization to manage a plurality of linked accounts and automatically manage the accounts in accordance with the customer authorization. The authorization to manage a plurality of linked accounts may include all of the customer's financial institution accounts, both internal and external or any portion of the customer's financial institution accounts, Once the authorization is received, the management module 312 is further operable to store the customer-authorized automated account management 314 in a corresponding customer profile 316 in a customer profile database 318.

According to one embodiment of the invention, the automated account management module is operable to create a balance between a plurality of account management benefit factors. These benefit factors may include, but are not intended to be limiting, maximizing the customer's rate of return on account funds, maintaining minimum balances in accounts requiring such and minimizing the number of transfers that occur between accounts. In general, maximizing the customer's rate of return and maintaining minimum balances in accounts are directly opposed to the concept of minimizing account transfers. Since both the financial institution and, more often, the customer may incur charges related to transfers; it is generally in the best interest of the bank and/or customer to minimize the number of transfers that occur. However, in order to maximize rate of return and ensure minimum balances, account transfers must occur. The automated account management module 312 may be configured to balance these benefit factors so as achieve the most effective account management for the customer, in terms of maximizing benefit factors while limiting account management costs.

As previously mentioned, **FIG. 2** provides a block diagram depiction of a financial institution customer's linked accounts 140, according to an embodiment of the present invention. The customer 110 has a plurality of accounts with the financial institution 150 that implements the account management system 100 (shown in **FIG. 1****).** In addition, the customer 110 has other accounts with other financial institutions, designated in **FIG. 2** as second financial institution 170 and *N*th financial institution 180, which signifies the last in a series of other financial institutions. The other financial institutions may be banks, credit unions, investment services companies and the like. It should also be noted that a customer may be an individual, a domestic partnership (*i*.*e*., married couple or the like), or a business entity.

According to the illustrated embodiment of **FIG. 2****.** the customer 110 may have a checking account 152, a bill pay account 154, a savings account 156, a money market account 158 and another undefined account 160 with the financial institution 150 that implements the account management system 100. Additionally, the customer 110 may have a checking account 172, a bill pay account 174, a savings account 176 and another undefined account 178 with the second financial institution 170. Further, the customer may have a checking account 182, a bill pay account 184, a savings account 186, a money market account 188 and another undefined account 190 with the *N*th financial institution.

In addition to having internal linked accounts (*i*.*e*., accounts associated with one specific financial institution), customer 110 may choose to link an internal account with an external accounts. Procedurally, linking of external accounts may include providing for a routing number and an account number associated with the linking accounts. For example, in the illustrated embodiment of **FIG. 2****,** as symbolized by the dotted-lines, checking account 152 is linked to checking account 172 and checking account 182; bill pay account 154 is linked to checking account 172, savings account 176 and savings account 186; savings account 156 is linked to checking account 182 and money market account 188; money market account 158 is linked to checking account 182; and other account 160 is linked to other account 190.

It should be noted that any one specific customer account may be linked to one or more of the customer's internal or external financial institution accounts. While the embodiment shown in **FIG. 2** depicts a maximum of three links for a given account, in practice, the number of accounts linked to any one specific account is limited only by the number of external accounts that the customer has. It is also noted, that any one specific account is not limited to being linked to only one external financial institution, but rather, may be linked to various different accounts at various different financial institutions.

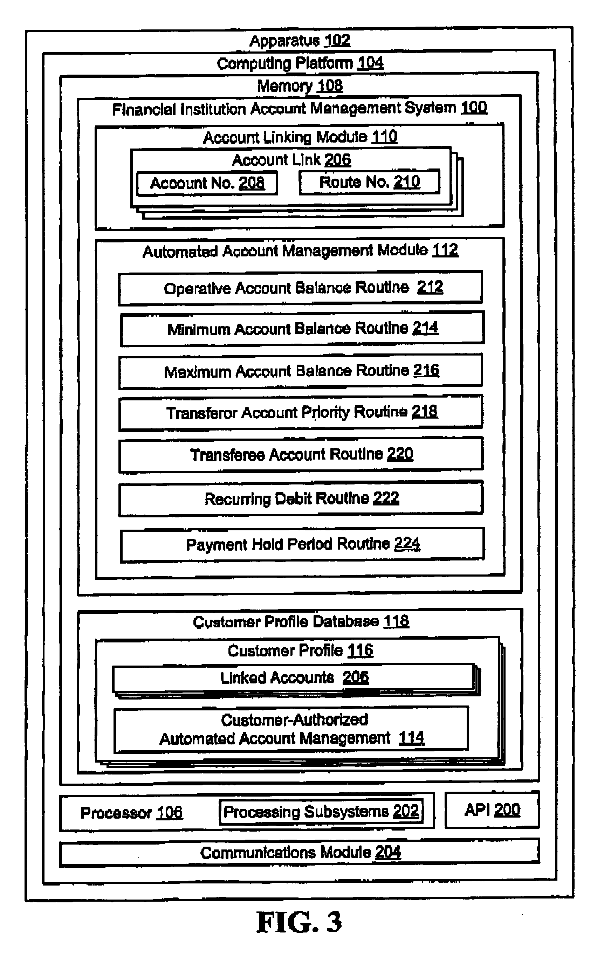

**FIG. 3** provides a more detailed block diagram depiction of the apparatus 102, in accordance with an embodiment of the present invention. In addition to providing greater detail, **FIG. 3** highlights various alternate embodiments of the invention. The apparatus 102 may include any type of one or more computerized, communication devices, such as a server, a personal computer, a portable computer, or any device or devices that include a computer platform and have a wired and/or wireless connection to a network, such as the Internet, an intranet or the like.

The apparatus 102 includes computing platform 104 that can transmit data across a network, and that can receive and execute routines and applications. Computing platform 104 includes memory 108, which may comprise volatile and nonvolatile memory such as read-only and/or random-access memory (RAM and ROM), EFROM, EEPROM, flash cards, or any memory common to computing platforms. Further, memory 108 may include one or more flash memory cells, or may be any secondary or tertiary storage device, such as magnetic media, optical media, tape, or soft or hard disk.

Further, computing platform 104 also includes processor 106, which may be an application-specific integrated circuit ("ASIC"), or other chipset, processor, logic circuit, or other data processing device, Processor 106 or other processor such as ASJC may execute an application programming interface ("API") layer 200 that interfaces with any resident programs, such as financial institution account management system 100 stored in the memory 108 of the apparatus 102.

Processor 106 includes various processing subsystems 202 embodied in hardware, firmware, software, and combinations thereof, that enable the functionality of apparatus 102 and the operability of the apparatus 102 on a network. For example, processing subsystems 202 allow for initiating and maintaining communications, and exchanging data, with other networked devices. For the disclosed embodiments, processing subsystems 202 of processor 106 may include any subsystem used in conjunction with financial institution account management system 100.

Computing platform 104 additionally includes communications module 204 embodied in hardware, firmware, software, and combinations thereof, that enables communications among the various components of the apparatus 102, as well as between the apparatus 102 and an external network, such as the Internet or the like. In described embodiments, the communication module 204 enables the communication of all correspondence between apparatus 102 and other computing devices, such as a customer's computing device, and is thus operable to receive customer link requests and customer-defined account management rules.

The memory 108 of computer platform 104 includes financial institution account management system 100 which is operable to automatically manage customer accounts.

Thus, financial institution account management system 100 includes account linking module 110 that is operable to receive customer requests to link financial institution accounts and establish account links 206 in accordance with the requests. In one embodiment a link request includes the routing number 208 and account number 210 of the account being linked. Account links 206 may be established between two or more customer accounts. In this regard, for example, a customer account, such as a customer checking account or the like, may have a first link established with first internal or external account, a second link with a second internal or external account and so forth. Once the account links 206 have been established they are stored in the customer profile 120 associated with the customer in the related customer profile database 118.

Financial institution account management system 100 additionally includes automated account management module 112 that is operable to receive customer authorization for automated account management 114 of two or more of the linked financial institution accounts and store the customer authorization for automated account management 114 in a customer profile 116 of the customer profile database 118. The automated account management module is additionally operable to transfer funds, automatically, from and to the customer authorized linked financial institution accounts for the purpose of maximizing the customer's rate of return associated with the linked financial institution accounts. According to one embodiment of the invention, the automated account management module 112 may be further operable to intuitively determine and create a balance between maximizing the customer's rate of return and limiting the number of account transfers, In this regard, the customer may be able to realize the most cost effective account management possible.

In one specific embodiment, the automated account management module 112 may include an operative account balance determination routine 212 that is operable to determine the operative account balance for one or more of the linked financial institution accounts, In this regard, the operative account balance determination routine 212 may take into account factors such as account type and/or historical account usage data in determining what the operative account balance should be. Once the operative account balance is determined, the automated account management module 112 may transfer funds into and out of the account to maintain or remain in close proximity to the operative account balance. In one embodiment of the invention, the operative account balance determination routine 212 may define the operative account balance as a range havening a minimum operative balance and a maximum operative balance. In such embodiments, if the minimum operative balance is met, the automated account management module 112 may transfer funds into the account and if the maximum operative balance is met, the automated account balance routine module 112 may transfer funds out of the account.

In another specific embodiment, the automated account management module 112 may include a minimum balance determination routine 214 operable to determine a minimum account balance for one or more linked accounts and/or a maximum balance determination routine 216 operable to determine a maximum account balance for one or more linked accounts. In such embodiments, the minimum and/or maximum account balances may be based on account type, historical account usage data and the like. Additionally, once the minimum and/or maximum account balances have been determined, the automated account balance routine module 112 may transfer funds in to or out of the account to maintain or remain in close proximity to the minimum and/or maximum account balances.

In a further alternate embodiment, the automated account management module 112 may include a transferor account priority determiner routine 218 operable to determine a transferor account priority for selecting a transferor account for transferring funds to one or more of the linked financial institution accounts in the event that the linked account has insufficient funds for a debit, payment or the like. In this regard, transferor account priority may establish a primary transferor account as the first account to look for transfer funds, a secondary transferor account as the second account to look for transfer funds if the primary account can not accommodate the necessary transfer amount and so on. According to one embodiment of the invention, transferor account priority may be predetermined based on rate of return, such that the primary transferor account is the lowest or a lower interest bearing account than the secondary transferor account and so on. Other factors may also be the basis for transferor account priority, such as account type, historical account usage data and the like. In another embodiment, transferor account priority may be determined dynamically at the time for transfer based on account type, rate of return, fund availability, rate of transfer and the like.

In similar fashion, according to another embodiment of the invention, the automated account management module 112 may include a transferee account determination routine 220 operable to determine a transferee account for transferring fund to, from one or more of the linked financial accounts. In certain embodiments, the automated account management module 112 may be configured to transfer funds from an account based on a predetermined or dynamically determined maximum account balance. For example, a low interest bearing account may have an associated maximum balance so as to minimize excessive funds. In such embodiments, the automated account management module 112 may identify the account to which the excessive funds may be transferred (*i*.*e*., the transferee account). The transferee account determination routine 220 may be configured to predetermine the transferee account based on account type, rate of return and the like. In other embodiments, the transferee account determination routine 220 may be configured to dynamically determine the transferee account at the time for transfer based on account type, current rate of return and the like.

In another alternate embodiment, the automated account management module 112 may include a recurring debit routine 222 operable to identify one or more recurring debits, purchases and to identify the proximate time of day, week, month, year or the like at which the recurring debit/purchase occurs. Recurring debits may include, but are not limited to, monthly mortgage/rent payments, monthly utility payments, and the like. Based on the identification of the recurring debits and the time of the recurring debit, the automated account management module 112. may transfer sufficient funds into the account associated with the recurring debit at a point in time prior to the time of the recurring debit to ensure that sufficient funds are available in the account when the recurring debit/purchase occurs.

Additionally, according to another alternate embodiment, the automated account management module 112 may include a payment hold period routine 224 operable to determine and implement a payment hold period for an outstanding payment account debit that requires funds to be transferred to the payment account to satisfy the debit. Thus, the hold period is required to ensure that overdraft fees are minimized or otherwise avoided. In one embodiment of the invention the payment hold period routine 224 may be configured to predetermine a hold period based on transferor account type, transferor account location, or any other factors. In other embodiments of the invention the payment hold period routine 226 may dynamically determine the hold period based on transferor account type, transferor account location, debit/payment amount and/or a priority of the payment/debit or the like.

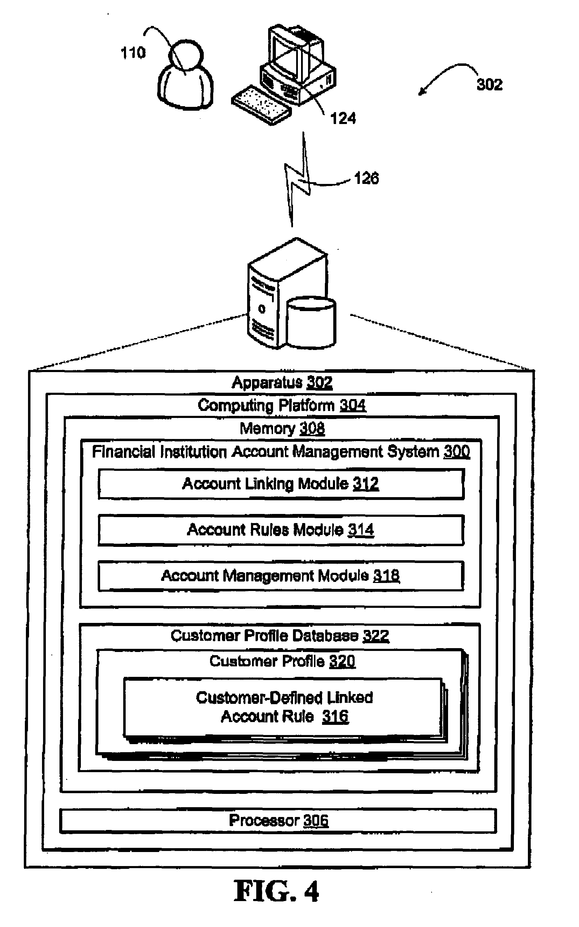

Referring to FIG. 4, a block diagram is depicted of an alternate system 300 for managing financial institution accounts, in accordance with an embodiment of the present invention. The system includes an apparatus 302, which may include one and, typically, a plurality of devices in the control of a financial institution, such as a bank or the like. The apparatus 302 includes a computing platform 304 having at least one processor 306 and a memory 308. The memory 308 of apparatus 302 includes a financial institution account management system 300 that is operable to provide customers, such as customer 110, the ability to pre-configure management of one or more customer accounts. In the illustrated embodiment of FIG. 4, pre-configured management is provided by customer-defined account management rules. Once the customer has defined account management rules, the account management system 300 is able to automatically manage the customer's accounts without further customer intervention.

Thus, financial institution account management system 300 includes account linking module 312 that is operable to receive customer requests to link financial institution accounts and establish account links in accordance with the requests. In one embodiment a link request includes the routing number and account number of the account being linked. Account links may be established between two or more customer accounts. In this regard, for example, a customer account, such as a customer checking account or the like, may have a first link established with first internal or external account, a second link with a second internal or external account and so forth.

Financial institution account management system 300 additionally includes account rules module 314 that is operable to receive one or more customer-defined account rules 316 associated with two or more linked financial institution accounts. Once the account rules are received, the account rules module 314 is further operable to store the customer-defined linked account rules 316 in a corresponding customer profile 320 in a customer profile database 322.

According to one embodiment of the invention, customer 310 may interface with the account management system 300 via a computing device 124 having a wired and/or wireless network connection 126. While the embodiment illustrated in **FIG. 3**. depicts a personal computer (PC) as the computing device 124, in other embodiments, the computing device may take the form of any device capable of network communication, such as a laptop computer, a handheld wireless device, such as a cellular telephone, personal digital assistant (PDA) or the like. In one embodiment of the invention, the financial institution providing the account management system 300 may use the Internet, and more specifically, an online banking portal, as the platform for providing the customer access to the system 300. In this regard, customer 110 may access the account management system 300 through a financial institution's online banking site or the like to establish account links, define account management rules or perform other functions related to the account management system 300.

The customer-defined account rules may include any rule that affects the management and/or funding of financial institution accounts, including, but not limited to, minimum account balances, maximum account balances, transfer account priorities and the like. In one embodiment of the invention, the financial institution that provides the management system may provide for a repository of rules, such as the most popular customer-defined rules or bank-suggested rules, that may be accessible to the customer via the online website, such as the online banking site. In this regard, the customer-defined rules may be further defined as customer-selected rules. In a further embodiment, the bank-suggested rules may be customer-specific bank suggested rules based on the customer's current account, account funding history, purchasing/debit history and the like. In selecting rules from the repository, the repository may suggest the parameters associated with a rule, such as appropriate balances, transfer account priorities or the like, or the customer may provide the parameters. In still further embodiments of the invention, the customer may be able to define their own specific rules without the benefit of repository of rules.

According to one embodiment of the invention, one or more of the customer-defined account rules are operable to maximize the customer's rate of return associated with two or more linked accounts. In this regard, rules may be defined that establish a maximum balance limit for one or more financial institution accounts, such as lower interest bearing checking or bill pay account, and designate one or more financial institution accounts, such as a higher interest bearing savings or money market account as the transferee account if the maximum balance limit is determined to be met.

According to another embodiment of the invention, one or more of the customer-defined account rules are operable to ensure adequate fund availability in one or more linked financial accounts for the purpose of finding an account debit/expenditure. In this regard, customer-defined rules may provide for establishing account priority for transferring funds to a payment account that is unable to properly fund a requested debit/expenditure. For example, a linked account may be established as a primary transfer account, a secondary transfer account, a tertiary transfer account or the like, for transferring funds from in the event that the linked payment account does not have sufficient funds available for a requested debit/expenditure. The transfer accounts may be savings accounts, money market accounts or the like. Additionally, the customer-defined rules may provide for establishing a minimum account balance and designating one or more linked accounts as a transferor account in the event that the established minimum balance account falls below the established minimum balance. In addition, designated transferor accounts may be prioritized to determine the transferor priority of the accounts in terms of funding the minimum balance account.

Financial institution account management system 300 additionally includes account management module 318 operable to manage funds in the plurality of linked customer accounts based on the customer-defined account rules. In one embodiment, the account management module 318 performs operations for maximizing the customer's rate of return on the plurality of linked accounts. For example, the account management module 318 may be operable to determine that a customer-defined account maximum balance has been met, determine the transferee account based on a customer designated transferee or transferee priority and automatically initiate the transfer of funds in excess of the maximum balance to the designated transferee account.

In another embodiment, the account management module 318 performs operations for ensuring adequacy of fund availability in accounts for the purpose of funding debits. For example, the account management module 318 may operable to determine that a payment account is unable to fund an outstanding debit, determine the customer-defined account transfer priority, transfer funds to the payment account based on the transfer priority and initiate payment from the payment account after successfully transferring funds to the payment account. According to such embodiments, the account management module may be further operable to determine and initiate a payment hold period for the purpose of ensuring that a proper payment hold period ensues while funds are being transferred into the payment account. The payment hold period provides for a timing mechanism that protects against the payment being denied due to insufficient funds. In yet another example, the account management module 318 is operable to determine that a customer-defined minimum balance has been met, determine a customer-defined transfer account or customer-defined transfer account priority and initiate transfer of funds from the customer-defined transfer account to the minimum balance account or initiate transfer to the minimum balance account in accordance with transfer account priority.

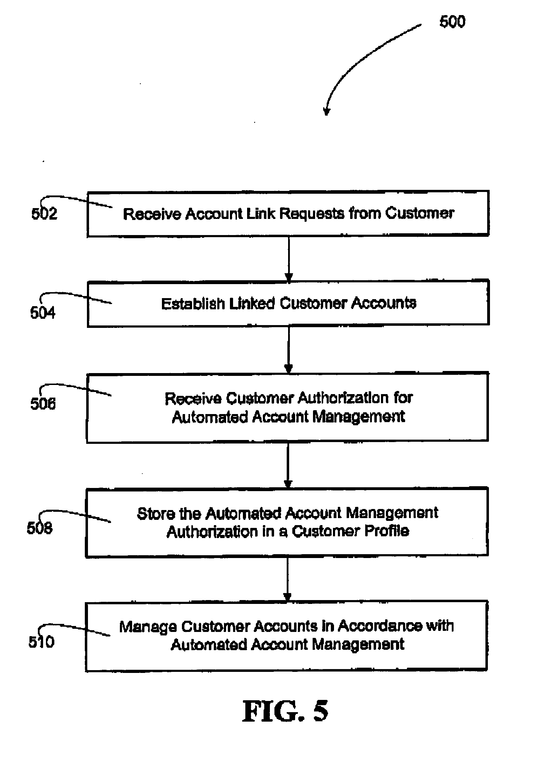

Referring to FIG. 5, a flow diagram is presented of another method 500 for account management, in accordance with an embodiment of the present invention. At Event 502, account link requests are received from a customer and, at Event 504, the account links are established based on the receive link requests.

At Event 506, customer authorization is received for financial institution-automated account management of a plurality of linked customer accounts. The customer may designate all of their internal and/or external accounts for automated account management or any portion of the customer's internal and/or external accounts. At Event 508, the automated account management authorization is stored in the corresponding customer profile.

At Event 510, customer designated accounts are automatically managed by the financial institution. In this regard, automated transfers are made by the financial institution to provide for maximize rate of return on customer accounts, and to ensure that accounts maintain a minimum balance. Additionally, the automated account management system may serve to limit the number of transfers so as to limit transfer costs for the financial institution and/or the customer. According to one embodiment, the automated management of accounts may serve to balance maximizing rate of return and ensuring minimum account balances while limiting the number of automated transfers between accounts.

According to one embodiment of the invention, automated managing of financial accounts may include determination of an operative account balance for one or more of the linked financial institution accounts. The operative balance may be determined based on account type, historical account usage data and any other relevant factors. In one embodiment the operative account balance may be a finite amount, such as an operative minimum or maximum balance, which may vary depending on time of week, month, year or the like. In another embodiment the operative account balance may be a range, including an operative minimum balance and an operative maximum balance, which may vary depending on time. Accordingly, funds may be transferred into or out of linked financial institution accounts based on the determined operative account balance.

In accordance with another embodiment of the invention, automated managing of linked financial accounts may include determination of transferor account priority. Transferor account priority is needed in the event that a linked financial institution account requires funding, *e.g*., an outstanding debit can not be satisfied from the account based on current balance or an account has fallen below an established minimum balance. Transferor account priority defines the account order for providing the required transfer amount. For example, a primary transferor account is the first account that is looked upon for providing the transfer amount and, in the event that the primary transferor account can not provide the necessary transfer amount, a secondary transferor account is looked upon for providing the transfer amount. In one embodiment, the automated management of linked accounts may be configured such the transfer amount must be provided from a single account, in other embodiments the system may be configured to allow for the transfer amount to come from multiple accounts. In one embodiment of the invention, transferor account priority may be determined based on account type, historical account usage data, rate of return and any other factors.

In another embodiment of the invention, automated managing of linked accounts may include determination of one or more transferee accounts. A transferee account may be needed if a linked account with maximum balance limit exceeds the maximum balance. The transferee account may be determined based on account type, rate of return or the like.

In yet another embodiment of the invention, automated managing of linked accounts may include identification of recurring debits/purchases and the date associated with making the recurring debit/payment. By identifying recurring debits/purchases and the associated date, the automated account management system can ensure that an account is properly funded, by transferring the necessary funds into the associated payment account, prior to the date of the recurring purchase. In the event that the recurring debit is an automated recurring debit/purchase, no customer intervention may be needed to provide funding to the payment account and to make the payment.

In a still further embodiment of the invention, automated managing of linked accounts may include determining a payment hold period for an outstanding debit that requires transfer of funds from a linked account to satisfy the outstanding debit amount. The hold period may be a predetermined hold period based on linked account type, account location or the like or, in other embodiments, the hold period may be dynamically determined based on based on linked account type, account location and dynamic factors, such as transfer amount, debit priority and the like.

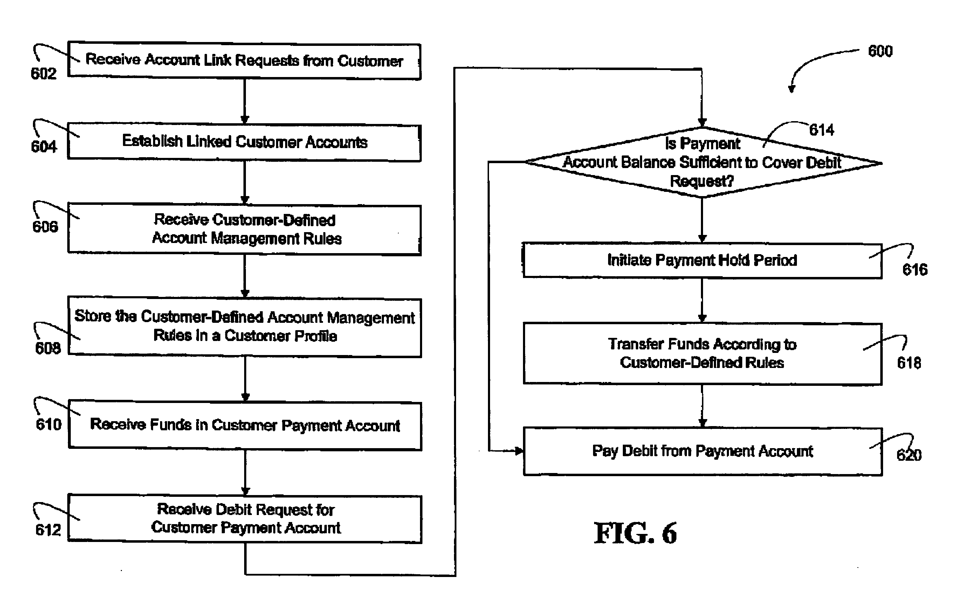

Referring to FIG. 6, a flow diagram is presented of a method 600 for financial account management, in accordance with an embodiment of the present invention. At Event 602, account link requests are received from a customer. The account link requests provide for linking two or more financial institution accounts. The accounts to be linked may be intemally-based accounts or internal and external-based accounts. In one embodiment, the account link requests include an account number and a financial institution routing number. At Event 604, the account links are established based on the receive link requests and the account links are stored in a corresponding customer profile,

At Event 606, customer-defined account management rules are received. In certain embodiments, the customer-defined account management rules may be customer selected rules, selected from a financial institution repository/database of rules, such as the most commonly selected/used rules or financial institution-suggested rules, which may be customer-specific. In other embodiments, the customer-defined account management rules may be rules devised by the customer based on the customer's required account management needs.

In accordance with some embodiments of the invention, one or more of the rules may be operable to ensure adequate funds are available in accounts to accommodate an account debit. In this regard, the customer may define rules that prioritize account transfers in the event that a payment account has insufficient funds and/or define minimum balances for payment accounts and rules to designate transfer accounts in the event that a minimum balance account falls below the established minimum balance.

In accordance with other embodiments, one or more of the rules may be operable to maximize the customer's rate of return. In this regard, the customer may define rules that insure that account balances are maximized in higher interest bearing accounts, such as savings, money market or the like, while minimizing the amount of excess funds in lower interest bearing accounts such as checking, bill pay or the like.

At Event 608, the received customer-defined account management rules are stored in the corresponding customer profile.

At Event 610, funds are received in a customer payment account, such as a checking account, bill pay account or the like. The funds may be received in any fashion, such as customer deposit, direct deposit of paycheck funds or the like. At Event 612, a debit request is received at the payment account. The debit request may be for customer payment (i.e., a withdrawal) or third party payment.

At Decision 614, a determination is made as to whether sufficient funds are available in the payment account to satisfy the debit request. If sufficient funds are available in the payment account, at Event 620, payment is made from the payment account, If it is determined that insufficient funds are currently available in the payment account, at Event 616. a payment hold period is initiated. The payment hold period ensures that proper period of time is allotted for funds to transfer into the payment account before releasing payment. In one embodiment of the invention the hold period is a predetermined period of time, which may be based on the nature of the pre-configured transfer accounts, the location of the pro-configured transfer accounts, and the like. In another embodiment of the invention, the hold period may be dynamically determined based on conditions affecting the current fund transfer, such as type of transfer account, location of transfer account, amount of transfer, priority of the payment type and the like.

At Event 618, funds are transferred to the payment account via an Automated Clearing House (ACH) type transfer based on prs-determined customer-defined account management rules. In this regard, the rules may include, but are not limited to, definition of transfer account priority, the amount of funds to be transferred (*e.g*., the exact debit request amount or an amount greater than the debit request amount), whether the transfer amount has to be satisfied from one account or whether the transfer can come from numerous accounts and the like.

At Event 620, after the funds have been transferred into the account and the hold period has been exhausted, payment is made from the payment account.

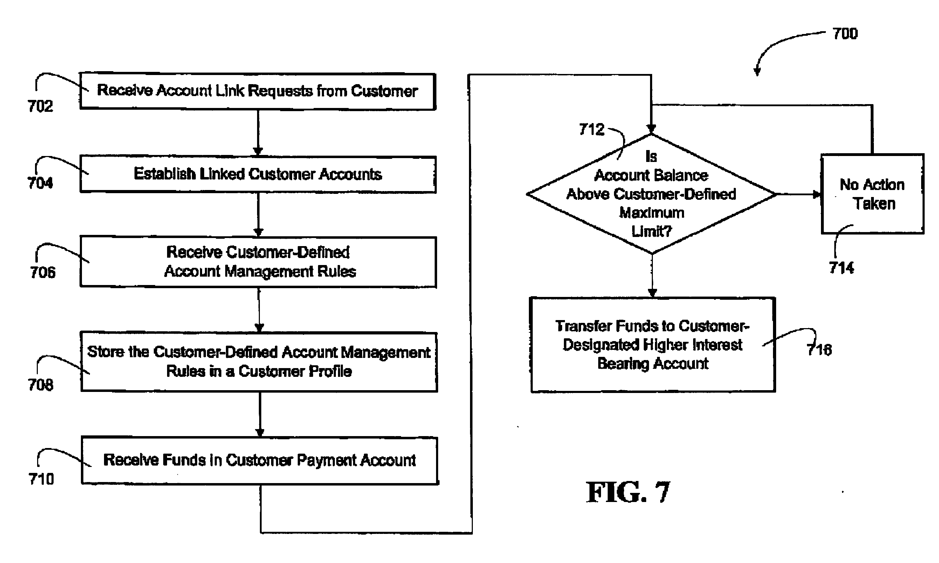

Referring to FIG. 7, a flow diagram is presented of another method 700 for financial account management, in accordance with an embodiment of the present invention. At Event 702, account link requests are received from a customer and, at Event 704, the account links are established based on the receive link requests.

At Event 706. customer-defined account management rules are received. In accordance with embodiments of the present invention, one or more of the rules may be operable to maximize the customer's rate of return. In this regard, the customer may define rules that insure that account balances are maximized in higher interest bearing accounts, such as savings, money market or the like, while minimizing the amount of excess funds in lower interest bearing accounts such as checking, bill pay or the like. At Event 708, the received customer-defined account management rules are stored in the corresponding customer profile.

At Event 710, funds are received in a customer payment account, such as a checking account, bill pay account or the like. The funds may be received in any fashion, such as customer deposit, direct deposit of paycheck funds or the like.

At Decision 712, a determination is made as to whether the account balance in a customer-designated account, typically a low interest-bearing account such as a checking or bill pay account, has exceeded a customer-defined maximum balance. If the balance is determined to have not exceeded a customer-defined maximum balance, at Event 714, no further action is taken and the system continues to monitor account balance.

If the balance in the customer-designated account is determined to have exceeded the customer-defined maximum balance limit, at Event 716, the amount above the customer-defined maximum balance limit is transferred, via Automated Clearing House (ACH) transfer or the like, to a customer-designated account, such as a higher interest-bearing account, for example, a savings account, a money market account or like account.

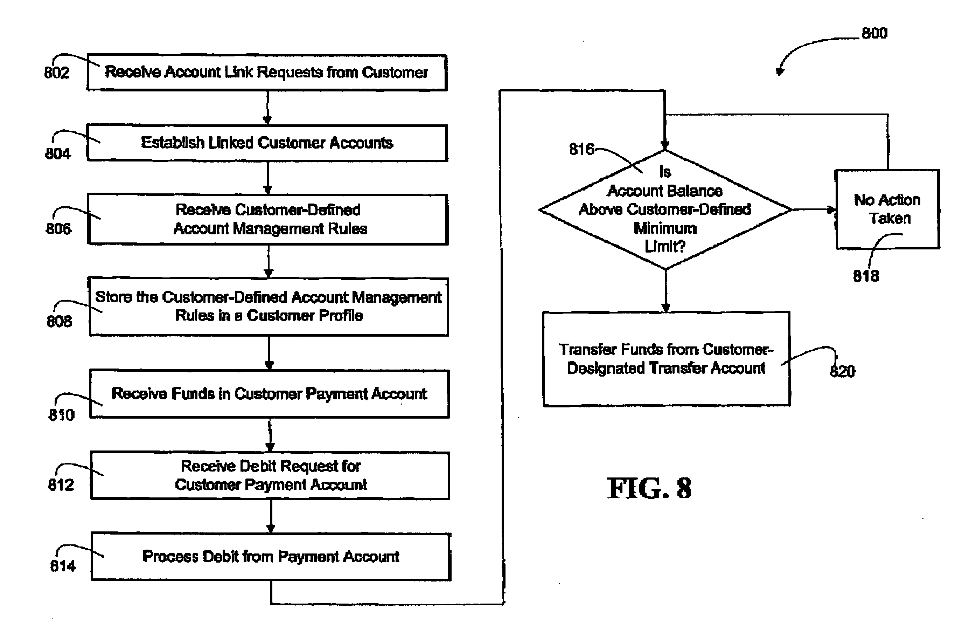

Referring to FIG. 8, another flow diagram is presented of a method 800 for financial account management, in accordance with an embodiment of the present invention. At Event 802, account link requests are received from a customer and, at Event 804, the account links are established based on the received link requests.

At Event 806, customer-defined account management rules are received. In accordance with some embodiments of the invention, one or more of the rules may be operable to ensure adequate funds are available in accounts to accommodate an account debit. In this regard, the customer may define rules that define minimum balances for payment accounts and rules to designate transfer accounts in the event that a minimum balance account falls below the established minimum balance. At Event 808, the customer-defined account management rules are stored in a corresponding customer profile.

At Event 810, funds are received in a customer payment account, such as a checking account, bill pay account or the like, The funds may be received in any fashion, such as customer deposit, direct deposit of paycheck funds or the like. At Event 812, a debit request is received at the payment account. The debit request may be for customer payment (i.e., a withdrawal) or third party payment. At Event 814. the debit is processed and the associated funds are withdrawn from the payment account.

At Decision 816, a determination is made as to whether the account balance in the payment account is above a customer-defined minimum limit. If the balance is determined to have not met the customer-defined minimum balance, at Event 818, no further action is taken and the system continues to monitor account balance.

If the balance in the customer-designated account is determined to have fallen below the customer-defined minimum balance limit, at Event 820, funds are transferred from a custom-defined transfer account or based on customer-defined transfer account priority. The transfer amount may be a customer-defined amount, a predetermined amount or a dynamically determined amount based on logically determined account need.

Thus, methods, apparatus and computer program products have been described that provide for an automated system for managing financial institution accounts. In accordance with embodiments of the invention, a financial institution customer links various internal or external financial institution accounts and subsequently grants a financial institution authorization to automatically manage the accounts. The automatic management of the accounts may provide for transferring funds in the managed accounts so as to maximize the customer's overall rate of return. In this regard, the automated system serves to prefer holding funds in higher interest bearing accounts, such as savings accounts, money market accounts or the like as opposed to holding funds in lower interest bearing accounts, such as checking or bill pay accounts. In addition, the automated account management system serves to limit the number of account transfers, thus reducing the costs associated with such transfers. Since maximizing rate of return involves the transfer of funds between accounts, in one embodiment, the system attempts to create an efficient and cost effective balance between maximizing rate of return and limiting the number of transfers.

While the foregoing disclosure discusses illustrative embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any embodiment may be utilized with all or a portion of any other embodiment, unless stated otherwise.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations and modifications of the just described embodiments can be configured without departing from the scope and spirit of the invention. Therefore, it is to be understood that, within the scope of the appended claims, the invention may be practiced other than as specifically described herein.

## Claims

1. A method for managing financial institution accounts, the method comprising:
receiving one or more financial institution account link requests, wherein each link request provides for linking two or more financial institution accounts associated with a customer; providing for one or more financial institution account links based on the one or more link requests; receiving customer authorization for financial institution-implemented automated account management of two or more of the linked financial institution accounts; storing the customer authorization for the financial institution-implemented automated account management system in a customer profile associated with the customer; and managing, automatically, the customer authorized two or more linked financial institution accounts, wherein managing the accounts includes transferring funds to maximize the customer's rate of return in the two or more linked financial institution accounts.

2. The method of claim 1, wherein managing further comprises creating a balance between the transferring of funds to maximize the customer's rate of return in the two or more linked financial institution accounts and minimizing a quantity of transfers and/or determining an operative account balance for one or more of the linked financial institution accounts.

3. The method of claim 2, wherein determining the operative account balance further comprises determining the operative account balance based on at least one of account type or historical account usage data and/or defining at least one of a minimum operative account balance or a maximum operative account balance and/or managing further comprises transferring funds from or to the one or more of the linked financial institution accounts based on the determined operative account balance.

4. The method of claim 3, wherein transferring funds to the one or more linked financial institution accounts further comprises maintaining a minimum account balance for the one or more of the linked financial institution accounts and/or maintaining a maximum account balance for the one or more of the linked financial institution accounts.

5. The method of claim 1, wherein managing further comprises determining a transferor account priority for selecting a transferor account for transferring funds to one or more of the linked financial institution accounts, optionally wherein determining the transferor account priority further comprises determining transferor account priority based on rate of return of transferor accounts and/or based on at least one of account type or historical account usage data.

6. The method of claim 1, wherein managing further comprises determining a transferee account for transferring funds from one or more of the linked financial institution accounts, optionally wherein determining the transferee account further comprises determining the transferee account based on rate of return.

7. The method of claim 1, wherein managing further comprises identifying one or more recurring debits from one or more of the linked financial institution accounts and maintaining a balance sufficient to cover the recurring debit, optionally wherein managing further comprises identifying a proximate date for the one or more recurring debits and transferring funds to the linked financial institution accounts associated with the one or more recurring debits prior to the identified proximate date.

8. The method of claim 1, wherein managing further comprises determining and implementing a payment bold period for an outstanding payment account debit that requires funds to be transferred to the payment account to satisfy the debit, optionally wherein determining the payment hold period further comprises determining, dynamically, the payment hold period based on a need to transfer funds to the payment account and/or determining, dynamically, the payment hold period further comprises determining, dynamically, the payment hold period based at least on one of transferor account type, transferor account location, transfer amount or transferor account priority.

9. An apparatus for managing financial institution accounts, the apparatus comprising:
a computer platform including at least one processor and a memory; a customer profile database including a plurality of customer profiled stored in the memory; an account linking module stored in the memory, executable by the at least one processor, and
operable to receive one or more financial institution account linking requests and provide for one or more financial institution links, wherein each link provides for linking two or
more financial institution accounts associated with a customer; and an automated account management module stored in the memory, executable by the at least one processor, and
operable to receive customer authorization for automated account management of two or
more of the linked financial institution accounts, store the customer authorization in a customer profile, and transfer funds, automatically, from and to the customer authorized linked financial institution accounts to maximize the customer's rate of return in the two or more linked financial institution accounts.

10. The apparatus of claim 9, wherein the automated account management module is further operable to create a balance between the automatic transfer of funds to maximize the customer's rate of return in the two or more linked financial institution accounts and limiting a quantity of transfers, optionally wherein the automated account management routine further comprises an operative account balance determination routine operable to determine the operative account balance for one or more of the linked financial institution accounts.

11. The apparatus of claim 10, wherein the operative account balance determination routine is further operable to determine the operative account balance based on at least one of account type or historical account usage data and/or to determine at least one of a minimum operative account balance or a maximum operative account balance and/or to transfer funds from or to the one or more of the linked financial institution accounts based on the determined operative account balance.

12. The apparatus of claim 10, wherein the automated account management module further comprises a minimum account balance routine operable to determine and maintain a minimum account balance for the one or more of the linked financial institution accounts and/or wherein the automated account management module further comprises a maximum account balance routine operable to determine and maintain a maximum account balance for the one or more of the linked financial institution accounts, and/or wherein the automated account management module further comprises a transferor account priority determiner routine operable to determine a transferor account priority for selecting a transferor account for transferring funds to one or more of the linked financial institution accounts.

13. The apparatus of claim 12, wherein the transferor account priority determiner routine is further operable to determine transferor account priority based on rate ofreturn of transferor accounts, optionally wherein the transferor account priority determiner routine is further operable to determine transferor account priority based on at least one of account type or historical account usage data.

14. The apparatus of claim 10, wherein the automated account management routine further comprises a transferee account determiner routine operable to determine a transferee account for transferring funds from one or more of the linked financial institution accounts, optionally wherein the transferee account determiner routine is further operable to determine the transferee account based on rate of return.

15. The apparatus of claim 10, wherein the automated account management routine further comprises a recurring debit routine operable to identify one or more one or more recurring debits from one or more of the linked financial institution accounts and maintaining a balance in an associated linked financial institution account sufficient to cover the recurring debit, optionally wherein the recurring debit routine is further operable to identify a proximate date for the one or more recurring debits and transfer funds to the associated linked financial institution account prior to the identified proximate date.
l6. The apparatus of claim 10, wherein the automated account management module further comprises a payment hold period routine operable to determine and implement a payment hold period for an outstanding payment account debit that requires funds to be transferred to the payment account to satisfy the debit, optionally wherein the payment hold period routine is further operable to determine, dynamically, the payment hold period based on a present need to transfer funds to the payment account and/or wherein the payment hold period routine is further operable to determine, dynamically, the payment hold period based at least on one of transferor account type, transferor account location, transfer amount or transferor account priority.
